# EUROPEAN PATENT APPLICATION

(11) **EP 4 425 805 A1**
(43) Date of publication of application: **04.09.2024**
(21) Application number: 22885906.2
(22) Date of filing: 25.10.2022
(51) Int. Cl.: H04B 10/00

(54) **FAULT POSITIONING METHOD, AND OPTICAL MODULE**

(30) Priority: 28.10.2021 CN 202111260186
(71) Applicant: CHINA MOBILE COMMUNICATION CO., LTD. RESEARCH INSTITUTE, Beijing 100053 (CN); CHINA MOBILE COMMUNICATIONS GROUP CO., LTD., Beijing 100032 (CN)
(72) Inventor: WANG, Dong, Beijing 100053 (CN); CAI, Qian, Beijing 100053 (CN); SUN, Jiang, Beijing 100053 (CN); ZHANG, Dechao, Beijing 100053 (CN); LI, Han, Beijing 100053 (CN)
(74) Representative: Maiwald GmbH
(86) International application number: PCT/CN2022/127244
(87) International publication number: WO 2023/072029

(57) **Abstract**

The present application discloses a fault positioning method, a device and a storage medium. The method comprises: a second optical module sends configuration information to a first optical module; and/or the second optical module receives response information of the first optical module and then sends a data stream to the first optical module, the response information being that after the first optical module has received the configuration information of the second optical module, the first optical module is configured to achieve loopback and a response information confirmation is sent to the second optical module so as to complete loopback configuration; the second optical module receives the data stream sent back by the first optical module; and fault positioning is performed according to the response information of the configuration information and/or the returned data stream, the second optical module being located in an active WDM device, and the first optical module being located in an AAU. Employing the present application, the fault definition of a wireless and transmission device may be supported. By means of the rapid troubleshooting of a management and control system, labor costs may be reduced, troubleshooting times are shortened, system management operation and maintenance ability is improved, and the reliability of a 5G forward transmission network is enhanced.

## Description

### CROSS-REFERENCE TO RELATED APPLICATIONS

This application is based on and claims priority to Chinese Patent Application No. 202111260186.0, filed on October 28, 2021, the entire contents of which are incorporated herein by reference.

### TECHNICAL FIELD

The present disclosure relates to a field of communication technologies, and particularly to a method and an apparatus for fault location, and a storage medium.

### BACKGROUND

A medium-scale centralized radio access network (C-RAN) with 10 stations is becoming a main networking scenario of a 5G fronthaul network. An optical fiber direct connection solution in a 4G distributed radio access network (D-RAN) mode has a low cost, but requires a lot of fiber resources. A wavelength division multiplexing (WDM) technology is introduced in the 5G fronthaul network, which greatly saves fiber resources and thus has become a consensus in the industry.

The conventional fronthaul solutions based on the WDM technology usually include an active WDM/optical transport network (OTN) and a passive WDM.

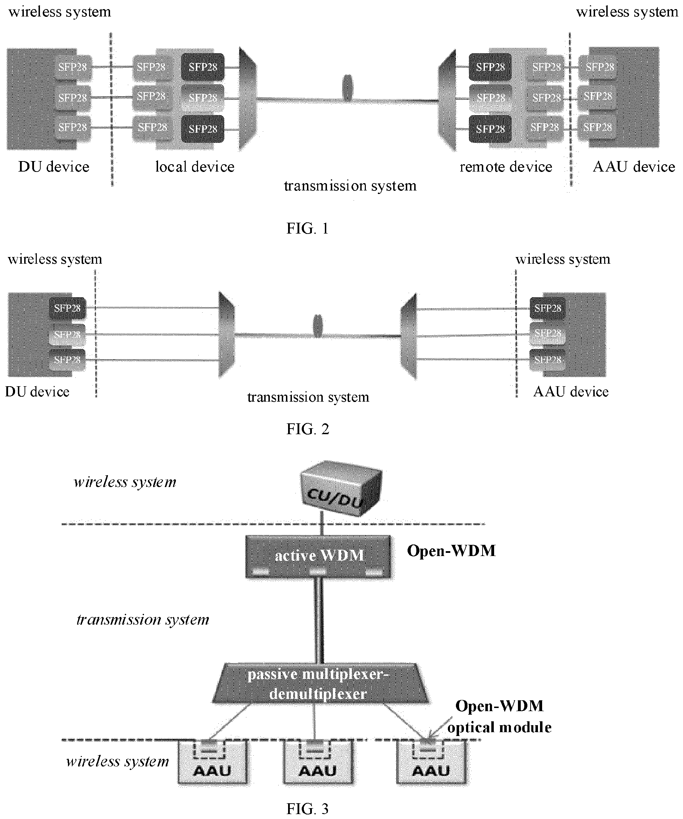

FIG. 1 is a diagram illustrating an active WDM/OTN transmission system. As illustrated in FIG. 1, in an active WDM/OTN solution, active WDM/OTN devices are deployed on an active antenna unit (AAU) side and a distributed unit (DU) side, respectively, and each is connected to the AAU and the DU via a grey light interface. A WDM interface or a high-speed Ethernet interface is adopted on line sides of 2 WDM/OTN devices. The AAU and the DU are located in a wireless management domain, and the active WDM/OTN device and an optical line between the active WDM/OTN devices are located in a transmission management domain.

FIG. 2 is a diagram illustrating a passive WDM transmission system. As illustrated in FIG. 2, in a passive WDM solution, passive WDM multiplexer-demultiplexer are deployed on the AAU side and the DU side, respectively. The AAU and the DU adopt a WDM optical module. Based on management interface division of the passive WDM solution, it is generally considered that the AAU and the DU are located in the wireless management domain, and the passive WDM multiplexer-demultiplexer on the AAU side, the passive WDM multiplexer-demultiplexer on the DU side, and an optical line between the passive WDM multiplexer-demultiplexer on the AAU side and the passive WDM multiplexer-demultiplexer on the DU side are located in the transmission management domain.

The active WDM/OTN solution has rich operation administration and maintenance management (OAM) capabilities, and the management duty of wireless domain and transmission domain is clear. However, the cost is high, power supply is needed at a remote side, and deployment is limited.

In the passive WDM solution, a deployment position is flexible, the power supply is not needed, and the cost is low. However, the capability to perceive a fiber link fault is weak. With respect to division of the OAM interface, if the transmission management domain only includes the passive WDM multiplexer-demultiplexer on the AAU side, the passive WDM multiplexer-demultiplexer on the DU side, and the optical line between the passive WDM multiplexer-demultiplexer on the AAU side and the passive WDM multiplexer-demultiplexer on the DU side, there is lacking of an online management means and a management control system, and an alarm requires to be given via manual troubleshooting or wireless network management.

In view of the above, a semi-active Open-WDM solution is proposed, and consists of an AAU colored light module, a passive WDM on the AAU side and an active WDM device on the DU side, to constitute a fronthaul network under a unified control. FIG. 3 is a diagram illustrating a semi-active Open-WDM transmission system. As illustrated in FIG. 3, a passive multiplexer-demultiplexer is adopted at the remote side, with a flexible deployment; the AAU optical module loads a OAM message using a pilot tone technology, which achieves a lightweight control at a low cost, and solves the problem of dumb resource management of the fronthaul network.

In the related art, two management domains of wireless and transmission are included. Since the AAU optical module is not only a control handle of a semi-active system but also is located in an AAU device, faults for a wireless device and a transmission device cannot be located in the OAM.

### SUMMARY

A method and an apparatus for fault location, and a storage medium are proposed in the disclosure, to solve the problem that faults for a wireless device and a transmission device cannot be located in operation and administration maintenance (OAM) for the semi-active Open-WDM solution.

The following technical solution is provided in the disclosure.

A method for fault location includes: sending, by a second optical module, a configuration message, to a first optical module; and/or, sending a data stream to the first optical module after the second optical module receives a response message from the first optical module, in which after the first optical module receives the configuration message from the second optical module and the first optical module configures a loopback configuration, the response message is sent to the second optical module to confirm the loopback configuration is successful; receiving, by the second optical module, a data stream returned from the first optical module; and performing fault location according to the response message for the configuration message and/or the data stream returned; in which the second optical module is located in an active wavelength division multiplexing (WDM) device, and the first optical module is located in an active antenna unit (AAU).

In an implementation, sending, by the second optical module, the configuration message, to the first optical module includes: receiving, by a control unit of the second optical module, a loopback configuration instruction from a main control unit; and sending the configuration message to the first optical module after loading the configuration message according to the instruction.

In an implementation, the configuration message is a low-frequency OAM message.

In an implementation, confirming the loopback configuration is successful according to the response message for the configuration message includes: after the second optical module receives the response message for the configuration message via a receiver optical subassembly (ROSA), demodulating the response message via a control unit, and confirming the loopback is successful according to the response message.

In an implementation, the response message for the configuration message is a low-frequency OAM message.

In an implementation, sending the data stream and receiving the data stream returned includes: sending the data stream according to a control instruction from the control unit; and receiving, the data stream returned after the loopback of the first optical module.

In an implementation, the data stream is a pseudo random binary sequence (PRBS) code stream.

In an implementation, the PRBS code stream is a data stream in a message frame for optical module service offline detection.

In an implementation, performing by the second optical module the fault location according to the response message for the configuration message and/or the data stream returned, includes: in response to the second optical module not receiving the response message returned from the first optical module or being incapable of correctly demodulating the response message, determining that there is a fault risk at one or a combination of a transmission link and a device between the active WDM device and the AAU, an AAU wireless device or an optical module; in response to the second optical module being capable of receiving and correctly demodulating the response message returned from the first optical module, determining that a transmission link and a device between the active WDM device and the AAU have a connectivity; in response to there being no bit error for a data stream sent by the second optical module and a data stream received by the second optical module, determining that a transmission link and a device between the active WDM device and the AAU are normal; and in response to there being a bit error for a data stream sent by the second optical module and a data stream received by the second optical module, determining that there is a degraded performance of a transmission link and a device between the active WDM device and the AAU.

A method for fault location includes: receiving, by a first optical module, a configuration message from a second optical module, in which the second optical module is located in an active WDM device, and the first optical module is located in an AAU; after the first optical module implements loopback configuration according to the configuration message, returning a response message for the configuration message to confirm the loopback configuration is successful, in which the response message is configured for the second optical module to perform fault location according to the response message for the configuration message; receiving, by the first optical module, a data stream returned from the second optical module; and returning, by the first optical module, the data stream based on a loopback mechanism to cause the second optical module and/or the active WDM device to perform fault location according to the data stream returned.

In an implementation, receiving, by the first optical module, the configuration message transmitted by the second optical module via the loopback mechanism includes: after the first optical module receives the configuration message via a ROSA, demodulating the configuration message via a control unit.

In an implementation, the configuration message is a low-frequency OAM message.

In an implementation, after the first optical module implements loopback configuration according to the configuration message, returning the response message for the configuration message includes: sending a loopback instruction to a clock and data recovery (CDR) according to the configuration message demodulated; executing, by the CDR, a line-side loopback operation, according to an instruction of a control unit, and returning an execution completion to the control unit; and loading, by the control unit, the response message for the configuration message, and sending the response message for the configuration message to the second optical module via a transmitter optical subassembly (TOSA).

In an implementation, the response message for the configuration message is a low-frequency OAM message.

In an implementation, the data stream is a PRBS code stream.

In an implementation, the PRBS code stream is a data stream in a message frame for optical module service offline detection.

An optical module is located in an active WDM device, and includes: a processor and a transceiver configured to receive and transmit data under a control of the processor. The processor is configured to read a program in a memory, to perform operations of:
sending a configuration message to a first optical module; and/or, sending a data stream to the first optical module after a response message is received from the first optical module, in which after the first optical module receives the configuration message from the second optical module and the first optical module configures a loopback configuration, the response message is sent to the second optical module to confirm the loopback configuration is successful;
receiving a data stream returned from the first optical module; and
performing fault location according to the response message for the configuration message and/or the data stream returned; in which the second optical module is located in the active WDM device, and the first optical module is located in an AAU.

In an implementation, transmitting the configuration message to the first optical module includes: receiving, by the control unit, a loopback configuration instruction from a main control unit; and sending the configuration message to the first optical module after loading the configuration message according to the instruction.

In an implementation, the configuration message is a low-frequency OAM message.

In an implementation, confirming the loopback configuration is successful according to the response message for the configuration message includes:
after receiving the response message for the configuration message via a ROSA, demodulating the response message via a control unit, and confirming the loopback is successful according to the response message.

In an implementation, the response message for the configuration message is a low-frequency OAM message.

In an implementation, sending the data stream and receiving the data stream returned includes: sending the data stream according to a control instruction from the control unit; and receiving, the data stream returned after the loopback of the first optical module.

In an implementation, the data stream is a PRBS code stream.

In an implementation, the PRBS code stream is a data stream in a message frame for optical module service offline detection.

In an implementation, performing the fault location according to the response message for the configuration message and/or the data stream returned, includes: in response to the second optical module not receiving the response message returned from the first optical module or being incapable of correctly demodulating the response message, determining that there is a fault risk at one or a combination of a transmission link and a device between the active WDM device and the AAU, an AAU wireless device or an optical module; in response to the second optical module being capable of receiving and correctly demodulating the response message returned from the first optical module, determining that a transmission link and a device between the active WDM device and the AAU have a connectivity; in response to there being no bit error for a data stream sent by the second optical module and a data stream received by the second optical module, determining that a transmission link and a device between the active WDM device and the AAU are normal; and in response to there being a bit error for a data stream sent by the second optical module and a data stream received by the second optical module, determining that there is a degraded performance of a transmission link and a device between the active WDM device and the AAU.

An optical module, located in an active WDM device, includes: a second optical module sending module, a second optical module receiving module, and a second optical module location module.

The second optical module sending module is configured to send a configuration message to a first optical module; and/or, send a data stream to the first optical module after the second optical module receives response message from the first optical module, in which after the first optical module receives the configuration message from the second optical module and the first optical module configures a loopback configuration, the response message is sent to the second optical module to confirm the loopback configuration is successful.

The second optical module receiving module is configured to receive a data stream returned from the first optical module.

The second optical module location module is configured to perform fault location according to the response message for the configuration message and/or the data stream returned.

The second optical module is located in the active WDM device, and the first optical module is located in an AAU.

In an implementation, the second optical module sending module is configured to send the configuration message to the first optical module by: receiving, by the control unit, a loopback configuration instruction from a main control unit; and sending the configuration message to the first optical module after loading the configuration message according to the instruction.

In an implementation, the second optical module sending module is configured to send the configuration message of a low-frequency OAM message.

In an implementation, the second optical module sending module is configured to confirm the loopback is successful according to the response message for the configuration message by performing: after receiving the response message for the configuration message via a ROSA, demodulating the response message via a control unit, and confirming the loopback is successful according to the response message.

In an implementation, the second optical module sending module is configured to receive the response message for the configuration message of a low-frequency OAM message.

In an implementation, the second optical module sending module is configured to send the data stream and receive the data stream returned by: sending the data stream according to a control instruction from the control unit; and receiving, the data stream returned after the loopback of the first optical module.

In an implementation, the second optical module sending module is configured to send a PRBS code.

In an implementation, the second optical module sending module is configured to send a data stream in a message frame for optical module service offline detection.

In an implementation, the second optical module location module is configured to perform the fault location according to the response message for the configuration message and/or the data stream returned by: in response to the second optical module not receiving the response message returned from the first optical module or being incapable of correctly demodulating the response message, determining that there is a fault risk at one or a combination of a transmission link and a device between the active WDM device and the AAU, an AAU wireless device or an optical module; in response to the second optical module being capable of receiving and correctly demodulating the response message returned from the first optical module, determining that a transmission link and a device between the active WDM device and the AAU have a connectivity; in response to there being no bit error for a data stream sent by the second optical module and a data stream received by the second optical module, determining that a transmission link and a device between the active WDM device and the AAU are normal; and in response to there being a bit error for a data stream sent by the second optical module and a data stream received by the second optical module, determining that there is a degraded performance of a transmission link and a device between the active WDM device and the AAU.

An optical module, located in an AAU, includes: a processor, and a transceiver, configured to receive and transmit data under a control of the processor. The processor is configured to read a program in a memory, to perform operations of: receiving a configuration message from a second optical module, in which the second optical module is located in an active WDM device, and the first optical module is located in the AAU; after configuring a loopback configuration according to the configuration message, returning a response message for the configuration message to confirm the loopback configuration is successful, in which the response message is configured for the second optical module to perform fault location according to the response message for the configuration message; receiving a data stream returned from the second optical module; and returning the data stream based on a loopback mechanism for the second optical module and/or the active WDM device to perform fault location according to the data stream returned.

In an implementation, receiving the configuration message from the second optical module via the loopback mechanism includes: after receiving the configuration message via a ROSA, demodulating the configuration message via a control unit.

In an implementation, the configuration message is a low-frequency OAM message.

In an implementation, after configuring a loopback configuration according to the configuration message, returning the response message for the configuration message includes: sending a loopback instruction to a CDR according to the configuration message demodulated; executing, by the CDR, a line-side loopback operation, according to an instruction of a control unit, and returning an execution completion to the control unit; and loading, by the control unit, the response message for the configuration message, and sending the response message for the configuration message to the second optical module via a TOSA.

In an implementation, the response message for the configuration message is a low-frequency OAM message.

In an implementation, the data stream is a PRBS code stream.

In an implementation, the PRBS code stream is a data stream in a message frame for optical module service offline detection.

An optical module, located in an AAU, includes: a first optical module receiving module, and a first optical module sending module.

The first optical module receiving module is configured to receive a configuration message from a second optical module, in which the second optical module is located in an active WDM device, and the first optical module is located in the AAU.

The first optical module sending module is configured to, after configuring a loopback configuration according to the configuration message, return a response message for the configuration message to confirm the loopback configuration is successful, in which the response message is configured for the second optical module to perform fault location according to the response message for the configuration message.

The first optical module receiving module is further configured to receive a data stream returned from the second optical module.

The first optical module sending module is further configured to return the data stream based on a loopback mechanism for the second optical module and/or the active WDM device to perform fault location according to the data stream returned.

In an implementation, the first optical module receiving module is configured to receive the configuration message transmitted by the first optical module via the loopback mechanism by: after receiving the configuration message via a ROSA, demodulating the configuration message via a control unit.

In an implementation, the first optical module receiving module is configured to receive a configuration message of a low-frequency OAM message.

In an implementation, the first optical module sending module is configured to, after configuring a loopback configuration according to the configuration message, return the response message for the configuration message by: sending a loopback instruction to a CDR according to the configuration message demodulated; executing, by the CDR, a line-side loopback operation, according to an instruction of a control unit, and returning an execution completion to the control unit; and loading, by the control unit, the response message for the configuration message, and sending the response message for the configuration message to the second optical module via a TOSA.

In an implementation, the first optical module sending module is configured to send the response message for the configuration message of a low-frequency OAM message.

In an implementation, the first optical module receiving module is configured to receive a PRBS code.

In an implementation, the first optical module receiving module is configured to receive a data stream in a message frame for optical module service offline detection.

A computer-readable storage medium, stores a computer program for performing the method for fault location.

The present disclosure has the following beneficial effects:
In the background that a semi-active system is expected to become a mainstream solution of 5G C-RAN fronthaul, there is no solution for how to locate the faults for the wireless device and the transmission device. In the technical solution according to embodiments of the disclosure, since the second optical module sends a message via the loopback mechanism, fault location may be performed according to the message returned from the first optical module, so that location of the faults for the wireless device and the transmission device may be supported.

Preferably, a OAM message, a loopback configuration message, a PRBS code stream and information of a service offline detection message are provided to perform fault location.

Preferably, rapid troubleshooting is performed via a management and control system, so that a labor cost may be reduced and a troubleshooting time may be shortened, which improves the OAM capability of the system, and enhances the reliability of the 5G fronthaul network.

### BRIEF DESCRIPTION OF THE DRAWINGS

Accompanying drawings described herein are provided for further understanding of the present disclosure, and constitute a part of the present disclosure, and exemplary embodiments and descriptions of embodiments of the present disclosure are used to explain the present disclosure, and cannot constitute a limitation of the present disclosure. In the accompanying drawings,
FIG. 1 is a diagram illustrating an active WDM/OTN transmission system in the background art;
FIG. 2 is a diagram illustrating a passive WDM transmission system in the background art;
FIG. 3 is a diagram illustrating a semi-active Open-WDM transmission system in the background art;
FIG. 4 is a flowchart illustrating a method for fault location at an active WDM device side according to embodiments of the present disclosure;
FIG. 5 is a flowchart illustrating a method for fault location at an AAU side according to embodiments of the present disclosure;
FIG. 6 is a environment diagram illustrating fault location for a 5G C-RAN fronthaul network according to embodiments of the present disclosure;
FIG. 7 is an architecture diagram illustrating a first optical module according to embodiments of the present disclosure;
FIG. 8 is a diagram illustrating a second optical module and its core unit in an active device according to embodiments of the present disclosure;
FIG. 9 is a diagram illustrating a first structure of an optical module according to embodiments of the present disclosure;
FIG. 10 is a diagram illustrating a second structure of an optical module according to embodiments of the present disclosure.

### DETAILED DESCRIPTION

A fault location solution for a 5G C-RAN fronthaul network is provided according to embodiments of the disclosure, to support location for faults of a wireless device and a transmission device, and enhance the OAM capability of the system.

The specific implementations of the present disclosure will be described in combination with accompanying drawings.

In a description process, the specific implementations will be described from perspective of a second optical module located in an AAU and a first optical module located in an active WDM device, respectively. Such kind of descriptions does not mean that both must be implemented with each other or must be implemented separately. In fact, when they are implemented separately, they also solve their respective problems at their own side, and when they are implemented in combination, they may obtain a better technical effect.

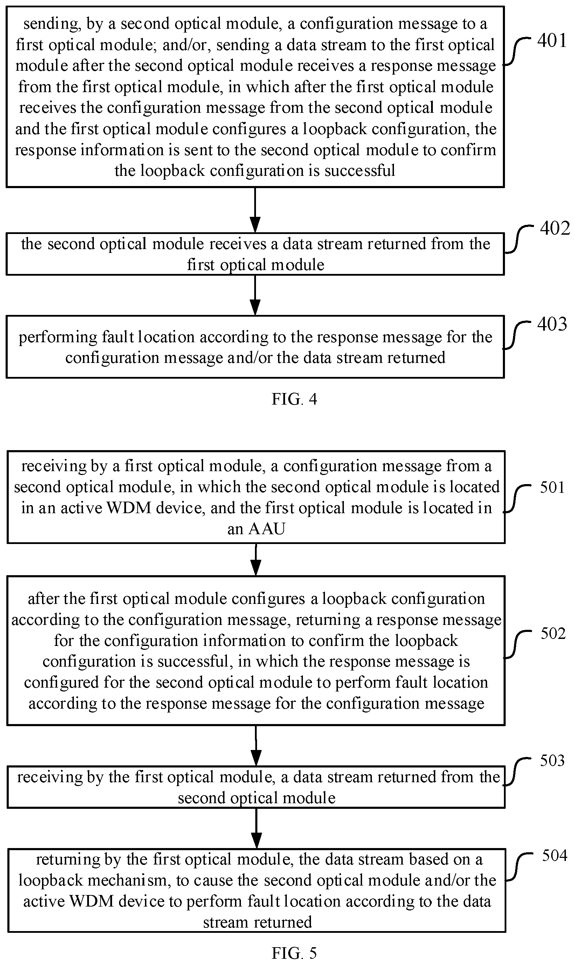

FIG. 4 is a flowchart illustrating a method for fault location at an active WDM device side according to embodiments of the present disclosure. As illustrated in FIG. 4, the method may include the following steps.

At step 401, a second optical module sends a configuration message to a first optical module; and/or, sends a data stream to the first optical module after the second optical module receives response message from the first optical module. After the first optical module receives the configuration message from the second optical module and the first optical module configures a loopback configuration, the response message is sent to the second optical module to confirm the loopback configuration is successful.

At step 402, the second optical module receives a data stream returned from the first optical module.

At step 403, fault location is performed according to the response message for the configuration message and/or the data stream returned.

The second optical module is located in the active WDM device, and the first optical module is located in an AAU.

FIG. 5 is a flowchart illustrating a method for fault location at an AAU side. As illustrated in FIG. 5, the method may include the following steps.

At step 501, a first optical module receives a configuration message from a second optical module. The second optical module is located in an active WDM device, and the first optical module is located in an AAU.

At step 502, after the first optical module implements loopback configuration according to the configuration message, a response message for the configuration message is returned to confirm the loopback configuration is successful. The response message is configured for the second optical module to perform fault location according to the response message for the configuration message.

At step 503, the first optical module receives a data stream returned from the second optical module.

At step 504, the first optical module returns the data stream based on a loopback mechanism to cause the second optical module and/or the active WDM device to perform fault location according to the data stream returned.

The devices involved are described as below.

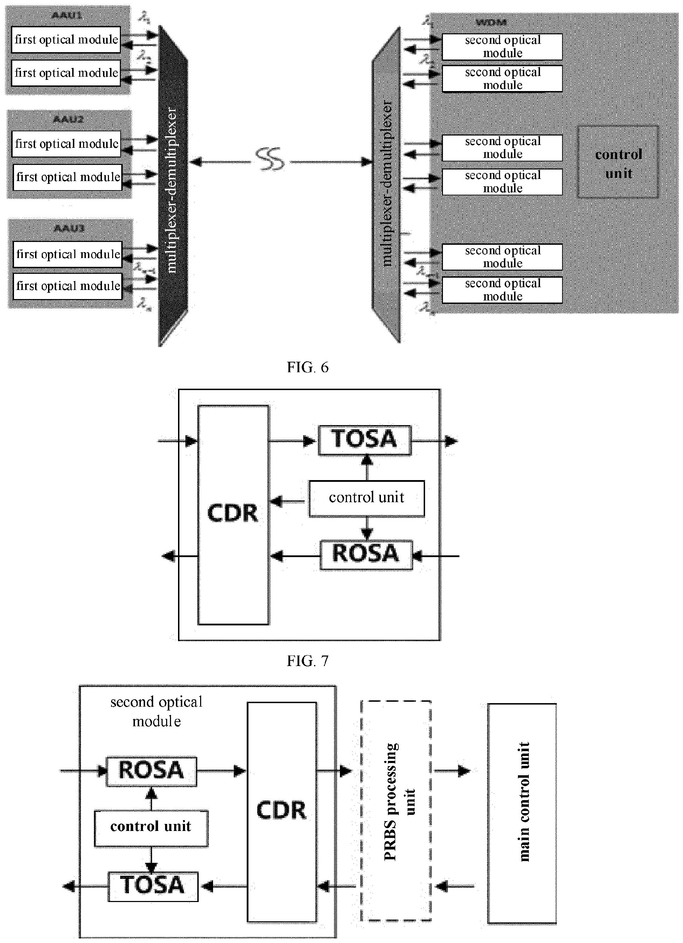

FIG. 6 is a environment diagram illustrating fault location for a 5G C-RAN fronthaul network. An environment diagram of implementing the solution for fault location for the 5G C-RAN fronthaul network is shown in FIG. 6. The environment consists of a first optical module located in the AAU, a multiplexer-demultiplexer on the AAU side, a multiplexer-demultiplexer on the DU side, and an active WDM device on the DU side.

FIG. 7 is an architecture diagram illustrating a first optical module. As illustrated in FIG. 7, the first optical module may include a core unit, which consists of a transmitter optical subassembly (TOSA), a receiver optical subassembly (ROSA), a control unit, and a clock and data recovery (CDR). The architecture is shown in FIG. 7. The control unit supports loading and extracting a low-frequency OAM message, and reading register information in the optical module and controlling the CDR. The CDR supports a line-side loopback function.

FIG. 8 is a diagram illustrating a second optical module and its core unit in an active device. As illustrated in FIG. 8, the active WDM device may include a second optical module, a PRBS processing unit (optional) and a main control unit. The architecture is shown in FIG. 8. The core unit of the second optical module consists of a TOSA, a ROSA, a control unit and a CDR. The control unit of the second optical module supports loading and extracting a low-frequency OAM message, and reading register information; the main control unit supports sending a control instruction and sending a PRBS data stream, and compares the sent PRBS with the received PRBS.

In an implementation, the second optical module sends the configuration message to the first optical module by: receiving, by a control unit of the second optical module, a loopback configuration instruction from a main control unit; and sending the configuration message to the first optical module after loading the configuration message according to the instruction.

In a specific implementation, the configuration message is a low-frequency OAM message.

Specifically, the main control unit sends a loopback instruction from a remote optical module (i.e., the first optical module) to the second optical module, and the control unit of the second optical module searches a register after receiving the instruction and loads the a low-frequency OAM message, and sends the a low-frequency OAM message to the first optical module.

A local side sends a loopback configuration to the remote optical module (i.e., the first optical module), and the local optical module (i.e., the second optical module) sends a format of a loopback configuration message to the remote side as shown in Table 1.

**Table 1: format of the loopback configuration feedback message sent by remote side**

| Bytes 1∼4 | Frame header symbol | 0x7E7E7E7E |
|---|---|---|
| Byte 5 | Module ID | 0xXX |
| Byte 6 | Message type | 0x01 (configuration request) |
| Byte 7 | Message ID | 0xF0 (Message type: release loopback message) |
| | | 0xF2 (Message type: outer loop configuration message) |
| Byte 8 | Message length | 0x01 (Message type: net load length of a message) |
| Byte 9 | Frame check | CRC8 check of the bytes 5∼10 |
| Byte 10 | Message content | 0X00 (configuration fails) |
| | | 0x01 (configuration succeeds) |
| Bytes 11∼63 | Message padding | 0x00 padding |
| Byte 64 | Frame tail symbol | 0x7E |

In an implementation, for the second optical module, confirming the loopback is successful according to the response message for the configuration message includes:
after the second optical module receives the response message for the configuration message via a ROSA, demodulating the response message via a control unit, and confirming the loopback is successful according to the response message.

In an implementation, the step that the first optical module receives the configuration message from the second optical module via the loopback mechanism includes: after the first optical module receives the configuration message via a ROSA, demodulating the configuration message via a control unit.

In an implementation, after the first optical module implements loopback configuration according to the configuration message, returning the response message for the configuration message includes: sending a loopback instruction to a CDR according to the configuration message demodulated; executing, by the CDR, a line-side loopback operation, according to an instruction of a control unit, and returning an execution completion to the control unit; and loading, by the control unit, the response message for the configuration message, and sending the response message for the configuration message to the second optical module via a TOSA.

In an implementation, the response message for the configuration message is a low-frequency OAM message.

Specifically, the first optical module demodulates the a low-frequency OAM message via the control unit after receiving the a low-frequency OAM message via the ROSA, searches the register, and sends a loopback instruction to the CDR; the CDR executes a line-side loopback operation according to an instruction of a control unit, and returns an execution completion to the control unit; and the control unit queries the register and loads the a low-frequency OAM message, sends the a low-frequency OAM message to the second optical module via the TOSA.

The second optical module demodulates the a low-frequency OAM message via the control unit after receiving the a low-frequency OAM message via the ROSA, and searches the register to confirm the loopback is successful.

The format of a loopback configuration feedback message sent by the remote side may refer to Table 2.

**Table 2: loopback configuration message**

| | | |
|---|---|---|
| Bytes 1∼4 | Frame header symbol | 0x7E7E7E7E |
| Byte 5 | Module ID | 0xXX |
| Byte 6 | Message type | 0x01 (configuration request) |
| Byte 7 | Message ID | 0x00 (Message type: release loopback message) |
| | | 0x02 (Message type: outer loop configuration message) |
| Byte 8 | Message length | 0x00 (Message type: net load length of a message) |
| Byte 9 | Frame check | CRC8 check of bytes 5∼8 and message content |
| Bytes 10∼63 | Message filling | 0x00 (null message: padding 0) |
| Byte 64 | Frame tail symbol | 0x7E |

In an implementation, sending the data stream and receiving the data stream returned includes: sending the data stream according to a control instruction from the control unit; and receiving, the data stream returned after the loopback of the first optical module.

In a specific implementation, the data stream is a PRBS code stream.

In an implementation, the PRBS code stream is a data stream in a message frame for optical module service offline detection.

Specifically, after the control unit sends an instruction, the PRBS code stream is sent and is looped back by the first optical module, then the PRBS sent and the PRBS received are compared to determine a link quality.

When an outer loop of a remote optical module (i.e., the first optical module) at the AAU side is configured, a local optical module at the DU side (i.e., the second optical module) sends a service offline detection message, and the message after the loopback is returned to the optical module at the DU side (the second optical module) and a system side, for further detection . The format of the message frame for optical module service offline detection configured may be shown in Table 3.

**Table 3: format of message frame for remote optical module service offline detection configured and sent by local side**

| | | |
|---|---|---|
| Bytes 1∼4 | Frame header symbol | 0x7E7E7E7E |
| Byte 5 | module ID | 0xXX |
| Byte 6 | Message type | 0x01 (configuration message) |
| Byte 7 | Message ID | 0x03 (offline performance monitoring) |
| Byte 8 | Message length | 0x36 (net load length of a message= 54) |
| Byte 9 | Frame check CRC8 | CRC8 check of bytes 5∼63 |
| | polynome X8+X5+X4+1 | |
| Bytes 10∼63 | Message content | 54Byte 0x00-0x35 |
| Byte 64 | Frame tail symbol | 0x7E |

The implementation of performing fault location on the second optical module is illustrated as follow.

In an implementation, performing by the second optical module the fault location according to the response message for the configuration message and/or the data stream returned, includes:
in response to the second optical module not receiving the response message returned from the first optical module or being incapable of correctly demodulating the response message, determining that there is a fault risk at one or a combination of a transmission link and a device between the active WDM device and the AAU, an AAU wireless device or an optical module;
in response to the second optical module being capable of receiving and correctly demodulating the response message returned from the first optical module, determining that a transmission link and a device between the active WDM device and the AAU have a connectivity;
in response to there being no bit error for a data stream sent by the second optical module and a data stream received by the second optical module, determining that a transmission link and a device between the active WDM device and the AAU are normal; and
in response to there being a bit error for a data stream sent by the second optical module and a data stream received by the second optical module, determining that there is a degraded performance of a transmission link and a device between the active WDM device and the AAU.

Specifically, if the second optical module does not receive a OAM message returned from the first optical module or is incapable of correctly demodulating the OAM message after the main control unit sends a loopback instruction for the remote optical module (the first optical module), there is a fault risk at a transmission link and a device between the active WDM device and the AAU at the DU side, an AAU wireless device and an optical module. Then, a fault point may be jointly determined using other cooperative solutions.

If the second optical module is capable of receiving and correctly demodulating the OAM message returned from the first optical module after the main control unit sends the loopback instruction for the remote optical module (the first optical module), a transmission link and a device between the active WDM device and the AAU at DU side have a connectivity. The main control unit of the active WDM device sends a PRBS code stream and compares the PRBS code stream with the received PRBS code stream, and adopts a code stream with a same rate as the original wireless service (for example, 25G). When there is no bit error, a transmission link and a device between the active WDM device and the AAU at the DU side are normal, and the fault point may be an AAU wireless device. When there is a bit error, there is a degraded performance of a transmission link and a device between the active WDM device and the AAU at the DU side. Then, the transmission and maintenance personnel may jointly determine a fault point using other cooperative solutions.

Based on the same conception, an optical module and a computer-readable storage medium are further provided according to embodiments of the disclosure. Since the principles that the devices solve the problems are similar to the method for fault location, the implementations of the devices may refer to the implementations of the methods, which are not repeated here.

The technical solution according to embodiments of the present disclosure may be implemented in following manners.

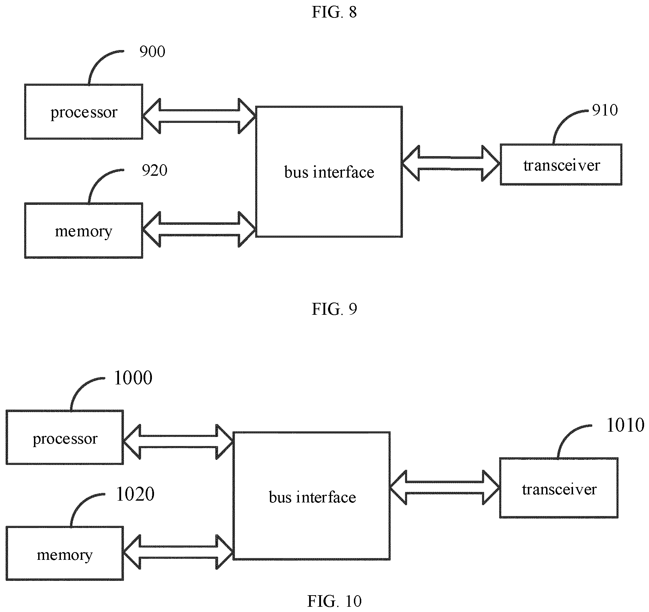

FIG. 9 is a diagram illustrating a first structure of an optical module, and is located in an active WDM transmission device. As illustrated in FIG. 9, the optical module includes a processor 900 and a transceiver 910.

The processor 900 is configured to read a program 920 in a memory, to perform operations of:
sending a configuration message to a first optical module; and/or, sending a data stream to the first optical module after the second optical module receives response message from the first optical module, in which after the first optical module receives the configuration message from the second optical module and the first optical module configures a loopback configuration, the response message is sent to the second optical module to confirm the loopback configuration is successful;
receiving a data stream returned from the first optical module; and
performing fault location according to the response message for the configuration message and/or the data stream returned.

The second optical module is located in the active WDM device, and the first optical module is located in an AAU.

The transceiver 910 is configured to receive and transmit data under a control 900 of the processor.

In an implementation, sending the configuration message to the first optical module includes: receiving, by the control unit, a loopback configuration instruction from a main control unit; and sending the configuration message to the first optical module after loading the configuration message according to the instruction.

In an implementation, the configuration message is a low-frequency OAM message.

In an implementation, confirming the loopback configuration is successful according to the response message for the configuration message includes: after receiving the response message for the configuration message via a ROSA, demodulating the response message via a control unit, and confirming the loopback is successful according to the response message.

In an implementation, the response message for the configuration message is a low-frequency OAM message.

In an implementation, sending the data stream and receiving the data stream returned includes: sending the data stream according to a control instruction from the control unit; and receiving, the data stream returned after the loopback of the first optical module.

In an implementation, the data stream is a PRBS code stream.

In an implementation, the PRBS code stream is a data stream in a message frame for optical module service offline detection.

In an implementation, performing the fault location according to the response message for the configuration message and/or the data stream returned, includes:
in response to the second optical module not receiving the response message returned from the first optical module or being incapable of correctly demodulating the response message, determining that there is a fault risk at one or a combination of a transmission link and a device between the active WDM device and the AAU, an AAU wireless device or an optical module;
in response to the second optical module being capable of receiving and correctly demodulating the response message returned from the first optical module, determining that a transmission link and a device between the active WDM device and the AAU have a connectivity;
in response to there being no bit error for a data stream sent by the second optical module and a data stream received by the second optical module, determining that a transmission link and a device between the active WDM device and the AAU are normal; and
in response to there being a bit error for a data stream sent by the second optical module and a data stream received by the second optical module, determining that there is a degraded performance of a transmission link and a device between the active WDM device and the AAU.

In FIG. 9, a bus architecture may include any number of interconnected buses and bridges, and specifically link various circuits of one or more processors represented by the processor 900 and memories represented by the memory 920. The bus architecture may further link other circuits such as peripheral equipment, voltage regulators and power management circuits, which are well known in the art and thus will not be further described herein. The bus interface provides an interface. The transceiver 910 may be a plurality of elements, i.e., may include a transmitter and a receiver, and units for communicating with various other apparatuses on transmission media. The processor 900 is in charge of managing the bus architecture and general processings, and the memory 920 may store data used by the processor 900 in performing operations.

An optical module is further provided according to embodiments of the present disclosure, and is located in an active WDM device. The optical module includes a second optical module sending module, a second optical module receiving module and a second optical module location module.

The second optical module sending module is configured to send a configuration message to a first optical module; and/or, send a data stream to the first optical module after the second optical module receives response message from the first optical module. After the first optical module receives the configuration message from the second optical module and the first optical module configures a loopback configuration, the response message is sent to the second optical module to confirm the loopback configuration is successful.

The second optical module receiving module is configured to receive a data stream returned from the first optical module.

The second optical module location module is configured to perform fault location according to the response message for the configuration message and/or the data stream returned.

The second optical module is located in the active WDM device, and the first optical module is located in an AAU.

In an implementation, the second optical module sending module is configured to send the configuration message to the first optical module by: receiving, by the control unit, a loopback configuration instruction from a main control unit; and sending the configuration message to the first optical module after loading the configuration message according to the instruction.

In an implementation, the second optical module sending module is configured to send the configuration message of a low-frequency OAM message.

In an implementation, the second optical module sending module is configured to confirm the loopback is successful according to the response message for the configuration message by: after receiving the response message for the configuration message via a ROSA, demodulating the response message via a control unit, and confirming the loopback is successful according to the response message.

In an implementation, the second optical module sending module is configured to receive the response message for the configuration message of a low-frequency OAM message.

In an implementation, the second optical module sending module is configured to send the data stream and receive the data stream returned by: sending the data stream according to a control instruction from the control unit; and receiving, the data stream returned after the loopback of the first optical module.

In an implementation, the second optical module sending module is configured to send a PRBS code.

In an implementation, the second optical module sending module is configured to send a data stream in a message frame for optical module service offline detection.

In an implementation, the second optical module location module is configured to perform the fault location according to the response message for the configuration message and/or the data stream returned by:
in response to the second optical module not receiving the response message returned from the first optical module or being incapable of correctly demodulating the response message, determining that there is a fault risk at one or a combination of a transmission link and a device between the active WDM device and the AAU, an AAU wireless device or an optical module;
in response to the second optical module being capable of receiving and correctly demodulating the response message returned from the first optical module, determining that a transmission link and a device between the active WDM device and the AAU have a connectivity;
in response to there being no bit error for a data stream sent by the second optical module and a data stream received by the second optical module, determining that a transmission link and a device between the active WDM device and the AAU are normal; and
in response to there being a bit error for a data stream sent by the second optical module and a data stream received by the second optical module, determining that there is a degraded performance of a transmission link and a device between the active WDM device and the AAU.

For ease of description, the components of the apparatus are respectively described by dividing various modules or units in terms of the functions. When the disclosure is implemented, the functions of various modules or units may be implemented in the same or multiple softwares or hardwares.

FIG. 10 is a diagram illustrating a second structure of an optical module, and is located in an AAU. As illustrated in FIG. 10, the optical module includes a processor 1000 and a transceiver 1010.

The processor 1000 is configured to read a program 1020 in a memory, to perform operations of:
receiving a configuration message from a second optical module, in which the second optical module is located in an active WDM device, and the first optical module is located in the AAU;
after configuring a loopback configuration according to the configuration message, returning a response message for the configuration message to confirm the loopback configuration is successful, in which the response message is configured for the second optical module to perform fault location according to the response message for the configuration message;
receiving a data stream returned from the second optical module; and
returning the data stream based on a loopback mechanism for the second optical module and/or the active WDM device to perform fault location according to the data stream returned.

The transceiver 1010 is configured to receive and transmit data under a control of the processor 1000.

In an implementation, receiving the configuration message from the second optical module via the loopback mechanism includes: after receiving the configuration message via a ROSA, demodulating the configuration message via a control unit.

In an implementation, the configuration message is a low-frequency OAM message.

In an implementation, after configuring a loopback configuration according to the configuration message, returning the response message for the configuration message includes: sending a loopback instruction to a CDR according to the configuration message demodulated; executing, by the CDR, a line-side loopback operation, according to an instruction of a control unit, and returning an execution completion to the control unit; and loading, by the control unit, the response message for the configuration message, and sending the response message for the configuration message to the second optical module via a TOSA.

In an implementation, the response message for the configuration message is a low-frequency OAM message.

In an implementation, the data stream is a PRBS code stream.

In an implementation, the PRBS code stream is a data stream in a message frame for optical module service offline detection.

In FIG. 10, a bus architecture may include any number of interconnected buses and bridges, and specifically link various circuits of one or more processors represented by the processor 1000 and of memories represented by the memory 1020. The bus architecture may further link various other circuits such as peripheral equipment, voltage regulators and power management circuits, which are well known in the art, and thus will not be further described herein. The bus interface provides an interface. The transceiver 1010 may be a plurality of elements, i.e., may include a transmitter and a receiver, and units for communicating with various other apparatuses on transmission media. The processor 1000 is in charge of managing the bus architecture and general processings, and the memory 1020 may store data used by processor 1000 in performing operations.

An optical module is further provided according to embodiments of the present disclosure, and is located in an AAU. The optical module includes a first optical module receiving module and a first optical module sending module.

The first optical module receiving module is configured to receive a configuration message from a second optical module. The second optical module is located in an active WDM device, and the first optical module is located in the AAU.

The first optical module sending module is configured to, after configuring a loopback configuration according to the configuration message, return a response message for the configuration message to confirm the loopback configuration is successful. The response message is configured for the second optical module to perform fault location according to the response message for the configuration message.

The first optical module receiving module is further configured to receive a data stream returned from the second optical module.

The first optical module sending module is further configured to return the data stream based on a loopback mechanism for the second optical module and/or the active WDM device to perform fault location according to the data stream returned.

In an implementation, the first optical module receiving module is configured to receive the configuration message from the first optical module via the loopback mechanism by: after receiving the configuration message via a ROSA, demodulating the configuration message via a control unit.

In an implementation, the first optical module receiving module is configured to receive a configuration message of a low-frequency OAM message.

In an implementation, the first optical module sending module is configured to after the loopback configuration is implemented according to the configuration message, return the response message for the configuration message by: sending a loopback instruction to a CDR according to the configuration message demodulated; executing, by the CDR, a line-side loopback operation, according to an instruction of a control unit, and returning an execution completion to the control unit; and loading, by the control unit, the response message for the configuration message, and sending the response message for the configuration message to the second optical module via a TOSA.

In an implementation, the first optical module sending module is configured to send the response message for the configuration message of a low-frequency OAM message.

In an implementation, the first optical module receiving module is configured to receive a PRBS code.

In an implementation, the first optical module receiving module is configured to receive a data stream in a message frame for optical module service offline detection.

For ease of description, the components of the apparatus are respectively described by dividing various modules or units in terms of the functions. When the disclosure is implemented, the functions of various modules or units may be implemented in the same or multiple software or hardware.

A computer-readable storage medium is further provided according to embodiments of the present disclosure. The computer-readable storage medium stores a computer program for performing the method for fault location.

The specific implementations may refer to the implementations of the method for fault location on the second optical module located in the active WDM device and/or the first optical module located in the AAU.

In summary, in the background that a semi-active system is expected to become a mainstream solution of 5G C-RAN fronthaul, there is no solution for how to locate the faults of the wireless device and the transmission device. In the technical solution according to embodiments of the disclosure, location of the faults for the wireless device and the transmission device is supported, and rapid troubleshooting is performed via the management and control system, so that the labor cost may be reduced and the troubleshooting time may be shortened, which improves the OAM capability of the system, and enhances the reliability of the 5G fronthaul network.

Those skilled in the art shall understand that embodiments in the present disclosure may be provided as methods, systems, or computer program products. Therefore, the present disclosure may adopt the form of a full hardware embodiment, a full software embodiment, or an embodiment combining a software and a hardware. Further, the present disclosure may adopt a form of a computer program product implemented on one or more computer usable storage media (including but not limited to a disk memory and an optical memory) including a computer usable program code.

The present disclosure is described with reference to flowcharts and/or block diagrams of the methods, devices (systems), and computer program products according to the embodiments of the present disclosure. It should be understood that each process and/or block in the flowchart and/or the block diagram, and a combination of the process and/or the block in the flowchart and/or the block diagram, may be implemented by computer program instructions. The computer program instructions may be provided to a processor of a general-purpose computer, a dedicated computer, an embedded processor, or other programmable data processing devices to produce a machine such that the instructions executed by the processor of the computer or other programmable data processing devices may produce an apparatus for implementing the functions specified in one or more processes of the flowchart and/or in one or more blocks of the block diagram.

The computer program instructions may be further stored in a computer-readable memory capable of guiding the computer or the other programmable data processing devices to operate in a particular manner, such that the instructions stored in the computer-readable memory produce an article of manufacture including an instruction apparatus. The instruction apparatus implements the functions specified in one or more processes of the flowchart and/or in one or more blocks of the block diagram.

The computer program instructions may be loaded onto a computer or other programmable data processing devices, such that a series of operation steps are performed on the computer or the other programmable devices to produce processings implemented by the computer. As such, the instructions executed on the computer or the other programmable devices provide steps of the functions specified in one or more processes of the flowchart and/or in one or more blocks of the block diagram.

Those skilled in the art may make various modifications and variations to the disclosure without deviating from the spirit and scope of the disclosure. Thus, if these modifications and variations of the disclosure fall within the scope of claims of the disclosure and their equivalents, the disclosure is also intended to include such modifications and variations.

## Claims

1. A method for fault location, comprising:
sending, by a second optical module, a configuration message, to a first optical module; and/or, sending a data stream to the first optical module after the second optical module receives a response message from the first optical module, wherein after the first optical module receives the configuration message from the second optical module and the first optical module configures a loopback configuration, the response message is sent to the second optical module to confirm the loopback configuration is successful;
receiving, by the second optical module, a data stream returned from the first optical module; and
performing fault location according to the response message for the configuration message and/or the data stream returned;
wherein the second optical module is located in an active wavelength division multiplexing (WDM) device, and the first optical module is located in an active antenna unit (AAU).

2. The method according to claim 1, wherein confirming the loopback configuration is successful according to the response message for the configuration message comprises:
after the second optical module receives the response message for the configuration message via a receiver optical subassembly (ROSA), demodulating the response message via a control unit, and confirming the loopback is successful according to the response message.

3. The method according to claim 2, wherein the response message for the configuration message is a low-frequency operation administration and maintenance (OAM) message.

4. The method according to claim 1, wherein sending the data stream and receiving the data stream returned comprises:
sending the data stream according to a control instruction from a control unit; and
receiving, the data stream returned after the loopback of the first optical module.

5. The method according to claim 4, wherein the data stream is a pseudo random binary sequence (PRBS) code stream.

6. The method according to claim 5, wherein the PRBS code stream is a data stream in a message frame for optical module service offline detection.

7. The method according to claim 1, wherein sending, by the second optical module, the configuration message, to the first optical module comprises:
receiving, by a control unit of the second optical module, a loopback configuration instruction from a main control unit; and
sending the configuration message to the first optical module after loading the configuration message according to the instruction.

8. The method according to claim 7, wherein the configuration message is a low-frequency operation administration and maintenance (OAM) message.

9. The method according to any one of claims 1 to 8, wherein performing, by the second optical module, fault location according to the response message for the configuration message and/or the data stream returned, comprises:
in response to the second optical module not receiving the response message returned from the first optical module or being incapable of correctly demodulating the response message, determining that there is a fault risk at one or a combination of a transmission link and a device between the active WDM device and the AAU, an AAU wireless device or an optical module;
in response to the second optical module being capable of receiving and correctly demodulating the response message returned from the first optical module, determining that a transmission link and a device between the active WDM device and the AAU have a connectivity;
in response to there being no bit error for a data stream sent by the second optical module and a data stream received by the second optical module, determining that a transmission link and a device between the active WDM device and the AAU are normal; and
in response to there being a bit error for a data stream sent by the second optical module and a data stream received by the second optical module, determining that there is a degraded performance of a transmission link and a device between the active WDM device and the AAU.

10. A method for fault location, comprising:
receiving, by a first optical module, a configuration message from a second optical module, wherein the second optical module is located in an active wavelength division multiplexing (WDM) device, and the first optical module is located in an active antenna unit (AAU);
after the first optical module configures a loopback configuration according to the configuration message, returning a response message for the configuration message to confirm the loopback configuration is successful, wherein the response message is configured for the second optical module to perform fault location according to the response message for the configuration message;
receiving, by the first optical module, a data stream returned from the second optical module; and
returning, by the first optical module, the data stream based on a loopback mechanism to cause the second optical module and/or the active WDM device to perform fault location according to the data stream returned.

11. The method according to claim 10, wherein receiving, by the first optical module, the configuration message from the second optical module comprises:
after the first optical module receives the configuration message via a receiver optical subassembly (ROSA), demodulating the configuration message via a control unit.

12. The method according to claim 11, wherein the configuration message is a low-frequency operation administration and maintenance (OAM) message.

13. The method according to claim 10, wherein after the first optical module configures the loopback configuration according to the configuration message, returning the response message for the configuration message comprises:
sending a loopback instruction to a clock and data recovery (CDR) according to the configuration message demodulated;
executing, by the CDR, a line-side loopback operation, according to an instruction of a control unit, and returning an execution completion to the control unit; and
loading, by the control unit, the response message for the configuration message, and sending the response message for the configuration message to the second optical module via a transmitter optical subassembly (TOSA).

14. The method according to claim 13, wherein the response message for the configuration message is a low-frequency operation administration and maintenance (OAM) message.

15. The method according to claim 10, wherein the data stream is a pseudo random binary sequence (PRBS) code stream.

16. The method according to claim 15, wherein the PRBS code stream is a data stream in a message frame for optical module service offline detection.

17. An optical module, located in an active wavelength division multiplexing (WDM) device, comprising:
a processor, configured to read a program in a memory, to perform operations of:
sending a configuration message to a first optical module; and/or, sending a data stream to the first optical module after a response message is received from the first optical module, wherein after the first optical module receives the configuration message from the second optical module and the first optical module configures a loopback configuration, the response message is sent to the second optical module to confirm the loopback configuration is successful;
receiving a data stream returned from the first optical module; and
performing fault location according to the response message for the configuration message and/or the data stream returned;
wherein the second optical module is located in the active WDM device, and the first optical module is located in an active antenna unit (AAU); and
a transceiver, configured to receive and transmit data under a control of the processor.

18. An optical module, located in an active wavelength division multiplexing (WDM) device, comprising:
a second optical module sending module, configured to send a configuration message to a first optical module; and/or, send a data stream to the first optical module after the second optical module receives response message from the first optical module, wherein after the first optical module receives the configuration message from the second optical module and the first optical module configures a loopback configuration, the response message is sent to the second optical module to confirm the loopback configuration is successful;
a second optical module receiving module, configured to receive a data stream returned from the first optical module; and
a second optical module location module, configured to perform fault location according to the response message for the configuration message and/or the data stream returned;
wherein the second optical module is located in the active WDM device, and the first optical module is located in an active antenna unit (AAU).

19. An optical module, located in an active antenna unit (AAU), comprising:
a processor, configured to read a program in a memory, to perform operations of:
receiving a configuration message from a second optical module, wherein the second optical module is located in an active wavelength division multiplexing (WDM) device, and the first optical module is located in the AAU;
after configuring a loopback configuration according to the configuration message, returning a response message for the configuration message to confirm the loopback configuration is successful, wherein the response message is configured for the second optical module to perform fault location according to the response message for the configuration message;
receiving a data stream returned from the second optical module; and
returning the data stream based on a loopback mechanism for the second optical module and/or the active WDM device to perform fault location according to the data stream returned; and
a transceiver, configured to receive and transmit data.

20. An optical module, located in an active antenna unit (AAU), comprising:
a first optical module receiving module, configured to receive a configuration message from a second optical module, wherein the second optical module is located in an active wavelength division multiplexing (WDM) device, and the first optical module is located in the AAU;
a first optical module sending module, configured to, after configuring a loopback configuration according to the configuration message, return a response message for the configuration message to confirm the loopback configuration is successful, wherein the response message is configured for the second optical module to perform fault location according to the response message for the configuration message;
a first optical module receiving module, further configured to receive a data stream returned from the second optical module; and
a first optical module transmitting module, further configured to return the data stream based on a loopback mechanism for the second optical module and/or the active WDM device to perform fault location according to the data stream returned.

21. A computer-readable storage medium storing a computer program, which performs any one of the methods of claims 1 to 16.
